# EUROPEAN PATENT APPLICATION

(11) **EP 4 593 152 A1**
(43) Date of publication of application: **30.07.2025**
(21) Application number: 25150376.9
(22) Date of filing: 06.01.2025
(51) Int. Cl.: H01M 10/42, H01M 50/105, H01M 50/124, H01M 50/126, H01M 50/14

(54) **BATTERY PACK**

(30) Priority: 19.01.2024 KR 20240008929
(71) Applicant: SAMSUNG SDI CO., LTD., Yongin-si, Gyeonggi-do 17084 (KR)
(72) Inventor: KO, Kyungsuk, 17084 Yongin-si (KR)
(74) Representative: Marks & Clerk LLP

(57) **Abstract**

A battery pack includes: a battery cell; a first attachment cover surrounding a first portion of the battery cell and is attachable to and detachable from the battery cell; a second attachment cover surrounding a second portion of the battery cell at a different location from the first attachment cover and is attachable to and detachable from the battery cell; and a release cover covering at least a portion of the first attachment cover and at least a portion of the second attachment cover and is attachable to and detachable from the first attachment cover and the second attachment cover.

## Description

### BACKGROUND

### 1. Field

Aspects of some embodiments relate to a battery pack.

### 2. Description of the Related Art

Secondary batteries are batteries that are generally configured to be repeatedly charged and discharged, and may be used as energy sources for mobile devices, electric vehicles, hybrid vehicles, electric bicycles, uninterruptible power supplies, etc. Secondary batteries may be used as single battery cells, depending on the types of external devices applied, or as modules or packs, in which multiple battery cells are connected and grouped into one unit.

The above information disclosed in this Background section is only for enhancement of understanding of the background and therefore the information discussed in this Background section does not necessarily constitute prior art.

### SUMMARY

Aspects of some embodiments include a battery pack capable of relatively stably attaching a cover to a battery cell.

However, the characteristics of embodiments according to the present disclosure are not limited to the characteristics described above, and other characteristics not mentioned may be more clearly understood by those skilled in the art from the description of embodiments according to the present disclosure described below.

Additional aspects will be set forth in part in the description which follows and, in part, will be apparent from the description, or may be learned by practice of the presented embodiments of the present disclosure.

According to some embodiments, a battery pack includes a battery cell, a first attachment cover that surrounds a portion of the battery cell and is attachable to and detachable from the battery cell, a second attachment cover that surrounds another portion of the battery cell at a different location from the first attachment cover and is attachable to and detachable from the battery cell, and a release cover that covers at least a portion of the first attachment cover and at least a portion of the second attachment cover and is attachable to and detachable from the first attachment cover and the second attachment cover.

According to some embodiments, the first attachment cover may be at the same level as that of the second attachment cover, and the release cover may be at a different level from those of the first attachment cover and the second attachment cover.

According to some embodiments, the second attachment cover may be located inward in a planar direction from an outline of the first attachment cover.

According to some embodiments, the first attachment cover may include an opening, and the second attachment cover may be located inside the opening, may not overlap the first attachment cover, and may have a size equal to or smaller than that of the opening.

According to some embodiments, the second attachment cover may be attached to or detached from the battery cell independently of the first attachment cover.

According to some embodiments, the battery cell may include a first surface, a second surface located opposite the first surface, and a pair of long sides connecting the first surface with the second surface, and a pair of short sides connecting the first surface with the second surface at different positions from those of the pair of long sides.

According to some embodiments, the first attachment cover may surround at least a portion of the pair of long sides, and the second attachment cover may surround at least a portion of any one of the pair of long sides.

According to some embodiments, the first attachment cover may surround the entire potion of the second surface, a portion of the first surface, and at least a portion of each of the pair of long sides.

According to some embodiments, the release cover may be on a surface of the first attachment cover and the second attachment cover opposite to a surface of the first attachment cover and the second attachment cover which faces the battery cell.

According to some embodiments, in a state in which the release cover is positioned on the first attachment cover and the second attachment cover, a portion of the first attachment cover may be located inside the release cover and another portion of the first attachment cover may be located outside the release cover.

According to some embodiments, the second attachment cover may be entirely inside the release cover.

According to some embodiments, the release cover may include a first region covering at least a portion of the first attachment cover and at least a portion of the second attachment cover, and a second region extending from the first region toward any one of the pair of short sides and not overlapping the battery cell.

According to some embodiments, a protection circuit module connected to the battery cell may be further included, and the second region may extend toward a short side at a position corresponding to the protection circuit module of the pair of short sides, and may protrude further outward than the short side.

According to some embodiments, the first region may have an adhesive material applied to a surface facing the battery cell, and the second region may not have an adhesive material applied to a surface facing the battery cell.

According to some embodiments, adhesive materials applied to surfaces of the first attachment cover and the second attachment cover facing the battery cell may have greater adhesive force than the adhesive material applied to the first region.

According to some embodiments, the first attachment cover may include an inner region attached to the second surface, a first outer region connected to the inner region to correspond to any one of the long sides of the battery cell, and a second outer region connected to the inner region to correspond to the other of the long sides of the battery cell.

According to some embodiments, the first attachment cover may include a wing part connected to the second outer region and attached to the first surface, an opening extending over the wing part, the second outer region and the inner region, and an edge region extending along an edge of the opening, wherein the second attachment cover is located inside the opening.

According to some embodiments, the release cover may cover an edge region.

According to some embodiments, a battery pack includes a battery cell, a first attachment cover that surrounds a portion of the battery cell and is attachable to and detachable from the battery cell, and a second attachment cover that surrounds another portion of the battery cell at a different location from the first attachment cover and is attachable to and detachable from the battery cell.

At least some of the above and other features of the invention are set out in the claims.

### BRIEF DESCRIPTION OF THE DRAWINGS

The above and other aspects, features, and characteristics of certain embodiments of the present disclosure will be more apparent from the following description taken in conjunction with the accompanying drawings.

The following drawings attached to the present specification illustrate embodiments of the present inventive concept and serve to understand the technical idea of the present inventive concept together with the description of the present inventive concept to be described later.
FIG. 1 illustrates one side of a battery pack according to some embodiments of the present disclosure.
FIG. 2 illustrates the other side of a battery pack according to some embodiments of the present disclosure.
FIG. 3 is an exploded view of a battery cell and a protection circuit module, according to some embodiments of the present disclosure.
FIG. 4 illustrates a battery cell according to some embodiments of the present disclosure.
FIG. 5 is an expanded view of a first attachment cover, a second attachment cover and a release cover, according to some embodiments of the present disclosure.
FIG. 6 illustrates a first attachment cover and a second attachment cover, according to some embodiments of the present disclosure.
FIG. 7 illustrates a release cover according to some embodiments of the present disclosure.
FIGS. 8 and 9 illustrate a state in which a first attachment cover, a second attachment cover and a release cover, according to some embodiments of the present disclosure, are attached to a battery cell.
FIG. 10 illustrates a state in which a release cover according to some embodiments of the present disclosure is removed from a battery cell.

### DETAILED DESCRIPTION

Reference will now be made in more detail to aspects of some embodiments, examples of which are illustrated in the accompanying drawings, wherein like reference numerals refer to like elements throughout. In this regard, embodiments according to the present disclosure may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

Embodiments of the present disclosure and methods for achieving the same may be more easily understood with reference to the detailed descriptions of the embodiments together with the accompanying drawings. Hereinafter, embodiments will be described in more detail with reference to the accompanying drawings. However, the described embodiments may be modified in various ways and may be implemented in different forms, and the present disclosure should not be construed as being limited to the embodiments described herein. Additionally, the individual features of the various embodiments of the present disclosure may be combined or partially or wholly coupled with each other, enabling various technically interconnected and actuated operations. The respective embodiments may be implemented independently of each other or may be implemented together in association. The described embodiments are provided as examples so that the present disclosure may be complete and to fully convey the idea of the present disclosure to those of ordinary skill in the art. The present disclosure should be understood as encompassing all modifications and equivalents, and may be substituted within the technical scope of the present disclosure. Thus, processes, components, and techniques not required by one of ordinary skill in the art for a complete understanding of aspects of the present disclosure may not be described.

Unless otherwise stated, throughout the accompanying drawings and descriptions, the same reference numbers, letters, or combinations thereof represent the same components, and descriptions thereof are omitted. In addition, irrelevant parts in describing the embodiments may not be shown for clarity of explanation.

The relative sizes of elements, layers, and areas in the drawings may be exaggerated for clarity. In addition, the use of hatching and/or shading in the accompanying drawings may generally be provided to clarify the boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified.

Various embodiments are described herein with reference to cross-sectional examples that are schematic examples of embodiments and/or intermediate structures. Thus, for example, the shape of the drawing may vary as a result of manufacturing techniques and/or tolerances. Furthermore, the specific structural or functional description disclosed herein is merely an example for explaining an embodiment according to the concept of the present disclosure. Therefore, embodiments disclosed in the present specification are not limited to the shape of the illustrated area, but should be construed as including, for example, a deviation of the shape according to a manufacturing process.

The area shown in the drawing is essentially schematic and its shape is not intended to illustrate the actual shape of the device area and is not intended to be limited. In addition, as recognized by those skilled in the art, the described embodiments may be modified in various ways to the extent that they do not deviate from the scope of the present disclosure.

A number of specific details are presented to provide a complete understanding of various embodiments in the specification. However, various embodiments may be implemented without these specific details or including one or more details. In other cases, well-known structures and devices are shown in block diagram form to avoid unnecessarily obscuring various embodiments.

As illustrated in the drawing, spatially relative terms such as "down", "up", "lower portion", "down", "upper portion", and the like may be used here to facilitate description of the relationship between one element or feature and another element or feature. The spatially relative terms are intended to include various directions of the device in use or operation in addition to the directions shown in the drawing. For example, if the device in the figures is turned over, elements described as "below," "beneath," "or "under" other elements or features would then be oriented "above" the other elements or features. Thus, as illustrative terms, "down" and "lower portion" may include both up and down directions. The device may be directed in a different direction (e.g., 90° rotation or another direction), and the spatially relative description used herein should be interpreted accordingly. Likewise, when it is stated that a first part is positioned "above" a second part, this means that the first part is positioned above or below the second part.

In addition, the expression "viewed from a plane" means the case where the object is viewed from above, and the expression "in an approximate cross-sectional view" means the case where the object is cut vertically or horizontally to take a rough cross-section. The term "as viewed from the side" means that the first object may be above, below, or on the side of the second object and vice versa. Additionally, the term "overlap" may include layer, stack, face or facing, extending over, covering, or partly covering or any other suitable term as would be appreciated and understood by those of ordinary skill in the art. The expression "nonoverlapping" may include meanings such as "apart from" or "separated from" and any other suitable equivalents recognized and understood by one of ordinary skill in the art. The terms "face" and "surface" may mean that a first object may directly or indirectly face a second object. When there is a third object between the first object and the second object, it may be understood that the first object and the second object face each other but indirectly face each other.

It will be understood that when an element, layer, region, or component is referred to as being "formed on," "on," "connected to," or "(operatively or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, "formed in", "connected to", or "combined with" may collectively refer to an integral or non-unitary combination or connection with a direct or indirect combination or connection of an element, layer, region, or component so that one or more elements, layers, regions, or components may exist. For example, when a layer, region, or component is referred to as being "electrically connected" or "electrically coupled" to another layer, region, or component, it can be directly electrically connected or coupled to the other layer, region, and/or component or intervening layers, regions, or components may be present. However, "directly connected to" or "directly combined with" means that one component is connected to or combined with another directly without an intermediate component, or the former is on the latter. In addition, in the present disclosure, when a portion of a layer, film, region, guide plate, etc. is formed on another portion, the formation direction is not limited to the upper direction, and includes the portion being formed on the side or bottom. Conversely, when a portion of a layer, film, region, guide plate, etc. is formed "underneath" another portion, this includes not only the case where the portion is "directly under" the other portion, but also the case where there is still another portion between the portion and the other portion. Meanwhile, other expressions describing relationships between components such as "between," "immediately between" or "adjacent to" and "directly adjacent to" may be construed similarly. In addition, it will also be understood that when an element or layer is referred to as being "between" two elements or layers, it can be the only element or layer between the two elements or layers, or one or more intervening elements or layers may also be present.

For the purposes of the present disclosure, expressions such as "at least one" or "any one" do not limit the order of individual elements. For example, "at least one of X, Y or Z", "at least one of X, Y and Z", and "at least one selected from a group of X, Y and Z" may include X alone, Y alone, Z alone, and any combination of two or more of X, Y and Z. Similarly, expressions such as "at least one of A and B" and "at least one of A or B" may include A, B, or A and B. In the present disclosure, the term "and/or" generally includes all combinations of one or more related list items. For example, expressions such as "A and/or B" may include A, B, or A and B.

Although the terms "first," "second," "third," etc. may be used herein to describe various elements, components, regions, layers, and/or cross-sections, such elements, components, regions, layers, and/or cross-sections are not limited by these terms. These terms are used to distinguish one element, component, region, layer or cross section from another element, component, region, layer or cross section. Therefore, the first element, component, region, layer or cross section described below may be referred to as the second element, component, region, layer or cross section without departing from the scope of the present disclosure. The description of an element as a "first" element may not require or imply the presence of a second element or other elements. Terms such as "first", "second", and the like may be used in the present disclosure to distinguish between different categories or sets of elements. For clarity, the terms "first", "second", etc. may represent "first category (or first set)", "second category (or second set)", etc., respectively.

The terms used herein are used only to describe particular embodiments, and are not intended to limit the present disclosure. As used in the present disclosure, a singular expression is intended to include a plural expression as well, and a plural expression is also intended to include a singular expression unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

When one or more embodiments may be implemented differently, a specific process order may be performed differently from the order described. For example, two processes described in succession may be performed simultaneously (or substantially simultaneously), or may be performed in the opposite order to the order described.

Terms "substantially", "about", "approximately" and similar terms are used as terms of approximation rather than degree, and mean satisfying the inherent range of variation in a measured or calculated value (e.g., the range of variation due to limitations of the measurement system). For example, "about" could mean within one or more standard deviations, or within ±30 %, ±20 %, ±10 %, or ±5 % of a specified value.

Unless otherwise defined, all terms used herein, including technical or scientific terms, have the same meaning as those generally understood by those of ordinary skill in the technical field to which the present disclosure belongs. Terms such as commonly used dictionary-defined terms shall be construed as having meaning consistent with their meaning in the context of the relevant technology and/or the present disclosure, and shall not be idealized or interpreted in an overly formal sense unless explicitly defined herein.

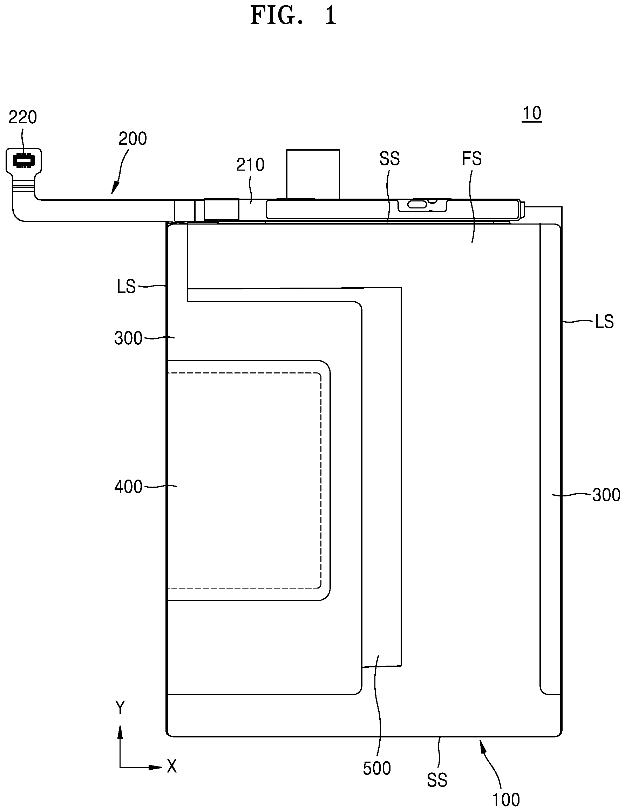

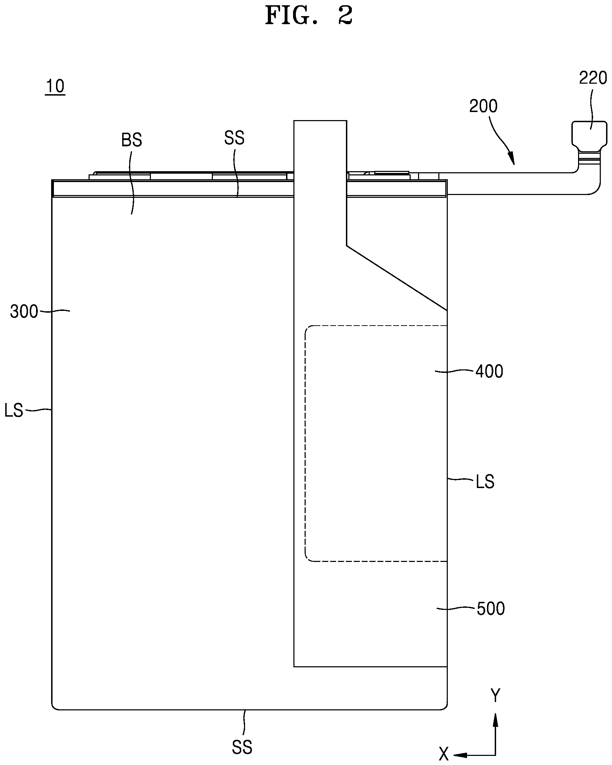

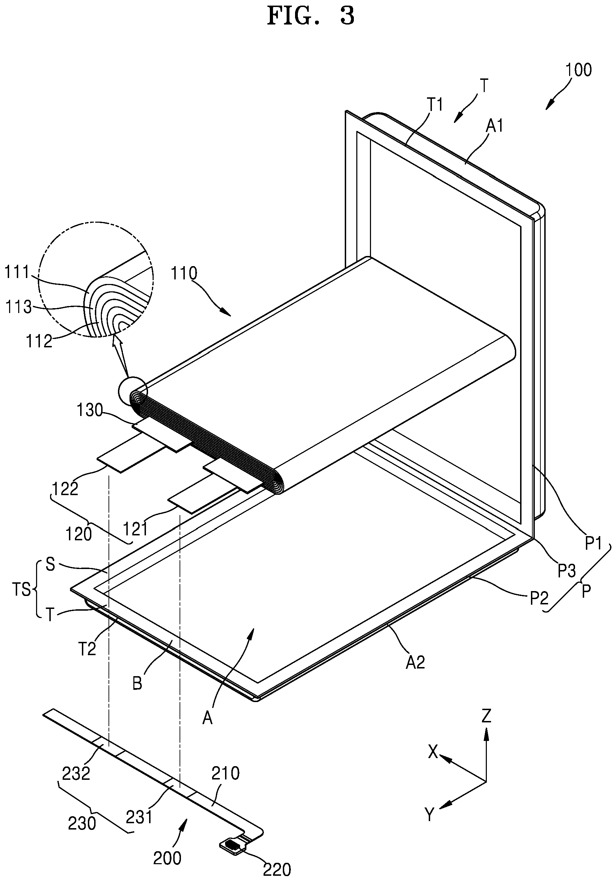

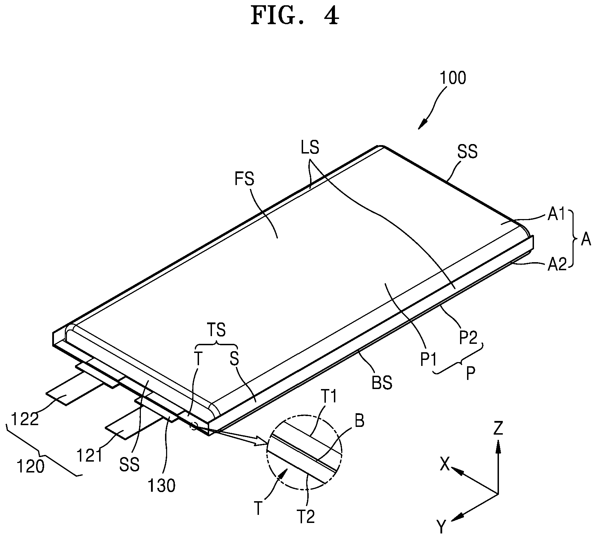

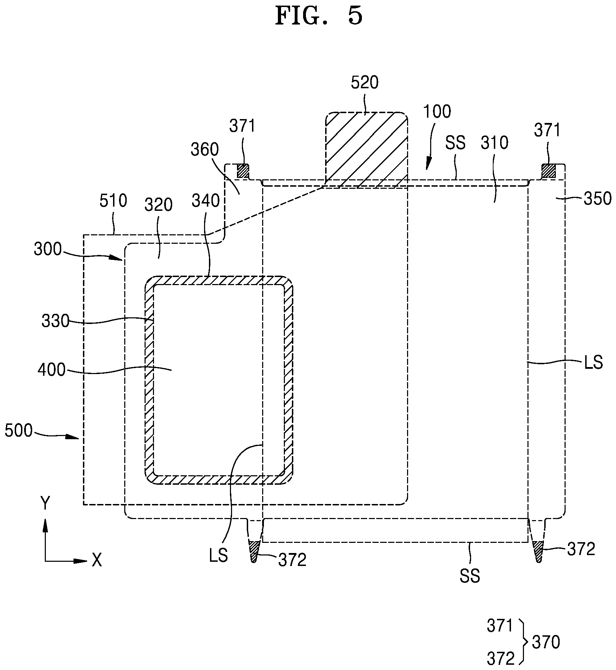

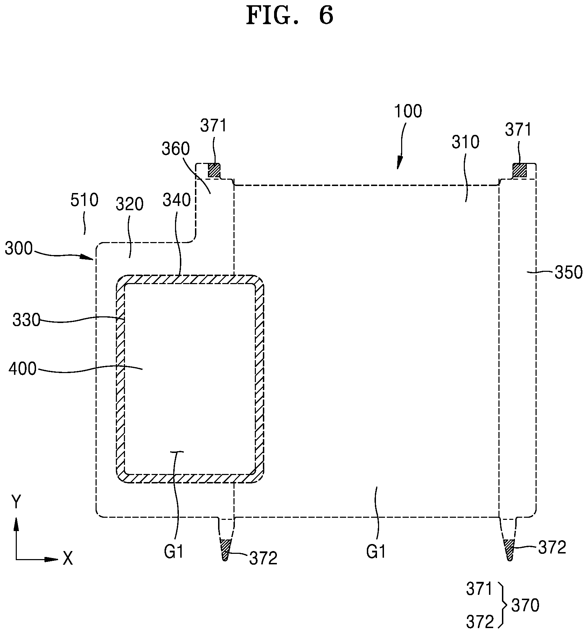

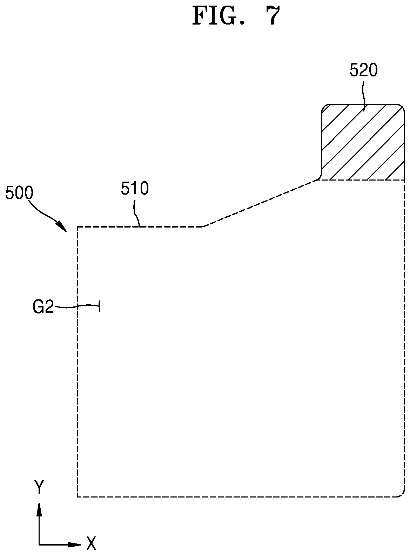

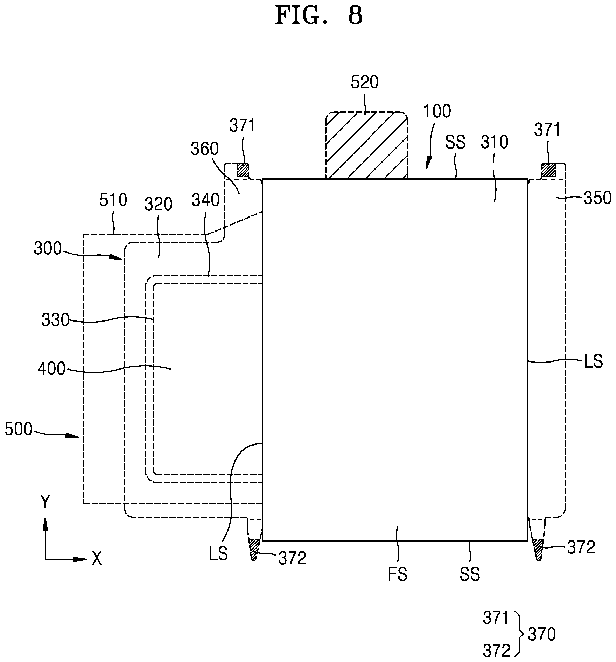

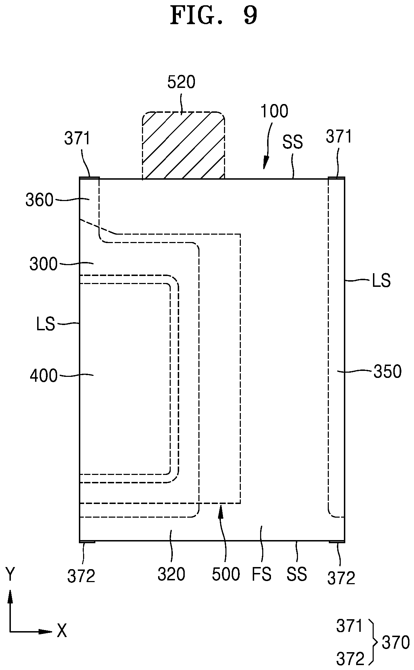

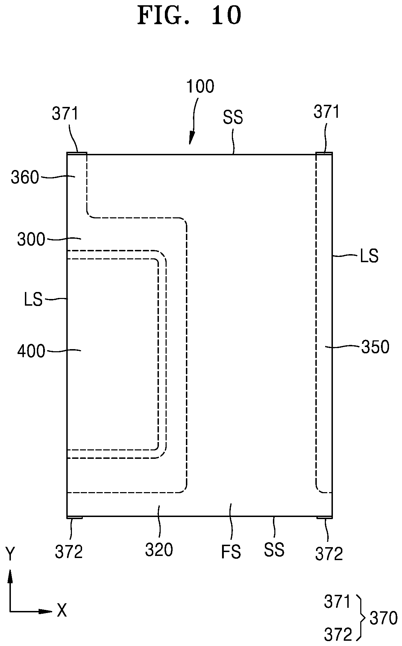

FIG. 1 illustrates one side of a battery pack 10 according to some embodiments of the present disclosure. FIG. 2 illustrates the other side of a battery pack 10 according to some embodiments of the present disclosure. FIG. 3 is an exploded view of a battery cell 100 and a protection circuit module 200 according to some embodiments of the present disclosure. FIG. 4 illustrates a battery cell 100 according to some embodiments of the present disclosure. FIG. 5 is an expanded view of a first attachment cover 300, a second attachment cover 400, and a release cover 500 according to some embodiments of the present disclosure. FIG. 6 illustrates a first attachment cover 300 and a second attachment cover 400 according to some embodiments of the present disclosure. FIG. 7 illustrates a release cover 500 according to some embodiments of the present disclosure. FIGS. 8 and 9 illustrate a state in which a first attachment cover 300, a second attachment cover 400, and a release cover 500 according to some embodiments of the present disclosure are attached to a battery cell 100. FIG. 10 illustrates a state in which a release cover 500 according to some embodiments of the present disclosure is removed from a battery cell 100.

The battery pack 10 may include a battery cell 100 as a pouch type battery, a protection circuit module 200, a first attachment cover 300, a second attachment cover 400, and a release cover 500. As shown in FIG. 1, the battery pack 10 may have at least one surface having a flat and even shape (e.g., a surface parallel to the Y-X plane of FIG. 1). At least a portion of the battery pack 10 may have a curved shape. The battery pack 10 may have a shape in which both side surfaces (for example, left and right sides of FIG. 1) are convexly curved to the outside. The battery pack 10 may include one or more tapes for supporting and protecting the battery cell 100 and the protection circuit module 200. The one or more tapes are positioned on at least one of the battery cell 100 or the protection circuit module 200 and may include an insulating material.

The battery pack 10 includes: the battery cell 100; the first attachment cover 300 that surrounds a portion of the battery cell 100 and is attachable to and detachable from the battery cell 100; the second attachment cover 400 that surrounds another portion of the battery cell 100 at a different position from the first attachment cover 300 and is attachable to and detachable from the battery cell 100; and a release cover 500 that covers at least a portion of the first attachment cover 300 and at least a portion of the second attachment cover 400, and is attachable to and detachable from the first attachment cover 300 and the second attachment cover 400.

The battery cell 100 may include an electrode assembly 110, an electrode tab 120, and a housing P.

The battery pack 10 may include the battery cell 100 including the electrode assembly 110 and the electrode tab 120 extending from the electrode assembly 110, and the protection circuit module 200 including a substrate 210, and a substrate tab 230 positioned on the substrate 210 and connected to the electrode tab 120.

As shown in FIG. 3, the electrode assembly 110 may include a first electrode plate 111 and a second electrode plate 112 having opposite polarities to each other, and a separator 113 between the first electrode plate 111 and the second electrode plate 112. The electrode assembly 110 may be formed in a roll type by winding the first electrode plate 111, the second electrode plate 112, and the separator 113. The electrode assembly 110 may have a winding axis parallel to a longitudinal direction (for example, a Y-axis direction of FIG. 3) of the battery cell 100. Alternatively, the electrode assembly 110 may be formed as a stack type by stacking a plurality of first electrode plates 111, second electrode plates 112, and separators 113. Alternatively, the electrode assembly 110 may include a mixture of a roll type and a stack type configuration. The first electrode plate 111 may be a negative electrode, and the second electrode plate 112 may be a positive electrode. Alternatively, the first electrode plate 111 may be a positive electrode, and the second electrode plate 112 may be a negative electrode.

The first electrode plate 111 may be formed by applying a first electrode active material such as graphite or carbon to a first electrode current collector plate formed of a metal foil such as copper, a copper alloy, nickel, or a nickel alloy. The first electrode plate 111 may include a first uncoated part, which is a region where the first electrode active material is not applied, and at least a portion of the first uncoated part may include a first electrode tab 121. The first electrode tab 121 may be a path for a current flow between the first electrode plate 111 and a first electrode current collector plate. When manufacturing the first electrode plate 111, the first electrode tab 121 may be formed by a cutting process so that at least a portion of the first electrode plate 111 protrudes to the outside of the electrode assembly 110 in advance. Alternatively, without a separate cutting process, the first electrode tab 121 may further protrude to the outside of the electrode assembly 110 than the separator 113.

The second electrode plate 112 may be formed by applying a second electrode active material such as a transition metal oxide to a second electrode current collector plate formed of a metal foil such as aluminium or an aluminium alloy. The second electrode plate 112 may include a second uncoated part, which is a region where the second electrode active material is not applied, and at least a portion of the second uncoated part may include a second electrode tab 122. The second electrode tab 122 may be a path for a current flow between the second electrode plate 112 and a second electrode current collector plate. When manufacturing the second electrode plate 112, the second electrode tab 122 may be formed by a cutting process so that at least a portion of the second electrode plate 112 protrudes to the outside of the electrode assembly 110 in advance. Alternatively, without a separate cutting process, the second electrode tab 122 may further protrude to the outside of the electrode assembly 110 than the separator 113.

The electrode assembly 110 may be surrounded by the housing P. As shown in FIG. 3, the electrode assembly 110 may have a size smaller than that of the housing P, and may be positioned inside the housing P to be connected to the protection circuit module 200 through the electrode tab 120.

The electrode tab 120 may be connected to the electrode assembly 110. The electrode tab 120 may be electrically connected to the electrode assembly 110, may be drawn out from the housing P surrounding the electrode assembly 110, and may be drawn out from a terrace part T of the housing P. As shown in FIG. 3, the electrode tab 120 may include a first electrode tab 121 and a second electrode tab 122 having different polarities, and the first electrode tab 121 and the second electrode tab 122 may be electrically connected to the first electrode plate 111 and the second electrode plate 112, respectively. In addition, the electrode tab 120 may be connected to the substrate tab 230. For example, the first electrode tab 121 may be connected to the first substrate tab 231, and the second electrode tab 122 may be connected to the second substrate tab 232. The electrode tab 120 may be connected to the substrate tab 230 through welding, bolting, or the like.

An insulating tape 130 may be attached to the electrode tab 120 to provide insulation and sealing between the electrode tab 120 and the housing P. As shown in FIG. 3, the insulating tape 130 may be positioned at one side of the electrode tab 120 close to the electrode assembly 110. One side of the insulating tape 130 may be in contact with the electrode assembly 110.

The first electrode tab 121 and the second electrode tab 122 may be on the same surface of the electrode assembly 110. As shown in FIG. 3, the first electrode tab 121 and the second electrode tab 122 may be on one surface (for example, a surface facing the protection circuit module 200 in FIG. 3) perpendicular to the winding axis of the electrode assembly 110. Alternatively, the first electrode tab 121 and the second electrode tab 122 may be on different surfaces of the electrode assembly 110. The first electrode tab 121 and the second electrode tab 122 are spaced apart from each other, and may be welded and connected to the first electrode current collector plate and the second electrode current collector plate, respectively.

The housing P may include a flexible exterior material such as a pouch. The housing P may include an insulating layer formed on either surface of a thin metal layer such as aluminium, and may be formed through a forming process such as drawing. The housing P may include a first housing P1 and a second housing P2 facing each other with the electrode assembly 110 therebetween. Each of the first housing P1 and the second housing P2 includes an inner space, and after the electrode assembly 110 is seated in the inner space of one of the first housing P1 and the second housing P2, the other of the first housing P1 and the second housing P2 may be covered over the electrode assembly 110. The first housing P1 and the second housing P2 may have the same or different sizes and shapes.

The housing P may include a folding part P3 that folds the first housing P1 and the second housing P2 so as to overlap each other. The first housing P1 and the second housing P2 may be folded in directions facing each other around the folding part P3 to form the housing P accommodating the electrode assembly 110. The first housing P1 and the second housing P2 may be connected to be folded to each other through the folding part P3. As shown in FIG. 3, in a state in which the first housing P1 and the second housing P2 have been folded around the folding part P3, each of the first housing P1 and the second housing P2 may include a sealing part TS for sealing an accommodation part A in addition to the accommodation part A in which the electrode assembly 110 is accommodated. The sealing part TS may be formed along the outer periphery of the accommodation part A to seal the accommodation part A in which the electrode assembly 110 is accommodated. The sealing part TS may be formed along the remaining corners of the housing P except for the corners of the housing P in which the folding part P3 is formed. The housing P may have a substantially rectangular parallelepiped shape by folding the first housing P1 and the second housing P2. In addition, the sealing part TS may be continuously formed along other short sides and long sides except for the short side where the folding part P3 is formed.

The sealing part TS may include a terrace part T from which the electrode tab 120 electrically connected to the electrode assembly 110 is drawn out, and a side sealing part S which contacts the terrace part T and extends in a direction crossing the terrace part T. As shown in FIG. 3, the terrace part T may be formed on one short side of the housing P, and the side sealing part S may be formed on either side of the pair of long sides of the housing P. The terrace part T may seal the accommodation part A while extending in a direction crossing the electrode tab 120, and the side sealing part S may seal the accommodation part A while extending in a direction crossing the terrace part T. The terrace part T and the side sealing part S may form the sealing part TS that continuously extends in contact with each other, and seal the accommodation part A together.

The sealing part TS may be formed by folding the first housing P1 and the second housing P2 in directions facing each other. The sealing part TS may have one surface of the first housing P1 side and one surface of the second housing P2 as outer surfaces, and may include a sealing surface B, which is an inner surface where the first housing P1 and the second housing P2 contact each other between two surfaces. The terrace part T of the sealing part TS may include a first surface T1 of the first housing P1 and a second surface T2 of the second housing P2, and may include the sealing surface B, which is an inner surface where the first housing P1 and the second housing P2 contact each other between the first and second surfaces T1 and T2.

The first housing P1 and the second housing P2 may respectively include a first accommodation part A1 and a second accommodation part A2 accommodating different parts of the electrode assembly 110. The accommodation part A in which the electrode assembly 110 is accommodated may be provided by coupling the first housing P1 and the second housing P2 to each other. For example, the accommodation part A in which the electrode assembly 110 is accommodated may be formed by connecting the first accommodation part A1 of the first housing P1 and the second accommodation part A2 of the second housing P2 to each other.

As shown in FIG. 4, the side sealing parts S are located on both sides of the battery cell 100 in the width direction (e.g., the X-axis direction), and may be folded upward. The pair of side sealing parts S may be folded in one direction (for example, a direction toward the upper surface of the battery cell 100 or an Z-axis direction).

The battery cell 100 may include a first surface FS and a second surface BS opposite the first surface FS. As shown in FIG. 4, in a state in which the first housing P1 and the second housing P2 are coupled to each other, the surface of the first housing P1 of the battery cell 100 facing the outside may be the first surface FS, and the surface of the second housing P2 facing the outside may be the second surface BS. In the battery cell 100, the housing P may include short sides SS and long sides LS. As shown in FIG. 4, in a state in which the first housing P1 and the second housing P2 are coupled to each other, two long edges may become long sides LS, and two short edges may become short sides SS. As illustrated in FIG. 4, the long sides LS may mean two long edges of the housing P in a state in which the side sealing parts S are folded toward the housing P. The pair of long sides LS and the pair of short sides SS may be connected with the first surface FS and the second surface BS at different positions.

Referring back to FIG. 3, the protection circuit module 200 may control charging and discharging operations of the battery cell 100 to prevent or reduce overdischarge and overcharge of the battery cell 100. The protection circuit module 200 may be connected to the battery cell 100 through the electrode tab 120. As shown in FIGS. 1 and 3, the protection circuit module 200 may be located above the battery cell 100 from which the electrode tab 120 protrudes.

The protection circuit module 200 may include the substrate 210, a connector 220, and the substrate tab 230.

The substrate 210 may include a circuit and various devices. The substrate 210 may have a long shape in one direction (e.g., the X-axis direction of FIG. 3 or the width direction of the battery cell 100). The substrate 210 is a printed circuit board, and at least a portion thereof may include a flexible material.

The connector 220 may connect the substrate 210 to an external device (e.g., a battery monitoring system (BMS) or the like). As shown in FIGS. 1 and 3, the connector 220 may be at an end portion of the substrate 210 in a longitudinal direction. The connector 220 may extend in a direction crossing the longitudinal direction of the substrate 210 (for example, the longitudinal direction of the battery cell 100 or the Y-axis direction of FIG. 3) and may include a terminal to be connected to an external device.

At least one substrate tab 230 may be positioned on the substrate 210 and connected to the electrode tab 120. The at least one substrate tab 230 includes a conductor that may be electrically connected to the electrode tab 120, and may include, for example, nickel, copper, aluminium, or the like. As shown in FIG. 3, two substrate tabs 230 may be located on the top surface of the substrate 210 and may be spaced apart from each other. The number of substrate tabs 230 may be the same as the number of electrode tabs 120. The substrate tab 230 may be at a position corresponding to the electrode tab 120 and may be connected to the electrode tab 120 through welding or the like to electrically connect the battery cell 100 to the protection circuit module 200. The substrate tab 230 may include a first substrate tab 231 connected to the first electrode tab 121 and a second substrate tab 232 connected to the second electrode tab 122.

The first attachment cover 300 is attachable to and detachable from the battery cell 100 and surrounds a portion of the battery cell 100. The first attachment cover 300 may be a thin film such as polyethylene terephthalate (PET) or thermoplastic polyurethane (TPU). The first attachment cover 300 may have a size larger than that of the first surface FS or the second surface BS of the battery cell 100 in at least one direction (e.g., the width direction of the battery cell 100 or the X-axis direction of FIG. 1). The first attachment cover 300 may surround at least a portion of the first surface FS and at least a portion of the second surface BS of the battery cell 100. As shown in FIGS. 1 and 2, the first attachment cover 300 may surround the entire second surface BS of the battery cell 100 and may surround a portion of the first surface FS of the battery cell 100.

The first attachment cover 300 may surround one or more corners of the battery cell 100. As illustrated in FIGS. 1 and 2, the first attachment cover 300 may at least partially surround each of the two long sides LS in a state of being attached to the battery cell 100. A portion of the first surface FS may be exposed to the outside in a state in which the first attachment cover 300 is attached to the battery cell 100.

The first attachment cover 300 may have different lengths extending in the width direction of the battery cell 100 (e.g., the X-axis direction of FIG. 1) from each of the pair of long sides LS. As shown in FIG. 1, a length of the first attachment cover 300 extending toward the inside of the battery cell 100 in the width direction at a position corresponding to the left long side of the pair of long sides LS may be longer than a length of the first attachment cover 300 extending toward the inside of the battery cell 100 in the width direction at a position corresponding to the right long side of the pair of long sides LS.

The first attachment cover 300 may have an adhesive material applied to a surface facing the battery cell 100. The adhesive material has a weak adhesive strength that allows a user to attach and detach the first attachment cover 300 to and from the battery cell 100 by hand, and allows the first attachment cover 300 to be repeatedly attached to and detached from the battery cell 100.

Referring to FIG. 5, the first attachment cover 300 may include an inner region 310, a wing part 320, an opening 330, an edge region 340, a first outer region 350, a second outer region 360, and a protrusion 370.

The inner region 310 may be in contact with one surface (for example, the second surface BS) of the battery cell 100. As shown in FIG. 5, the inner region 310 may have a size and a shape corresponding to the second surface BS of the battery cell 100. The inner region 310 may be attached to the second surface BS of the battery cell 100 to support other components of the first attachment cover 300, such as the wing part 320, the opening 330, the edge region 340, the first outer region 350, the second outer region 360, and the protrusion 370. The inner region 310 may be connected to the first outer region 350 and the second outer region 360. The first outer region 350 may be connected to an edge of the inner region 310 corresponding to any one of the pair of long sides LS (for example, the right long side LS of FIG. 5 or the long side LS located opposite the second attachment cover 400). In addition, the second outer region 360 may be connected to the other edge of the inner region 310 corresponding to the other of the pair of long sides (e.g., the left long side LS of FIG. 5 or the long side LS overlapping the second attachment cover 400.

The wing part 320 may surround a portion of the battery cell 100. The wing part 320 may surround a portion of the first surface FS of the battery cell 100. The wing part 320 is connected to the second outer region 360, and may be attached on the first surface FS together with the second attachment cover 400. An outer surface of the wing part 320 is in contact with the release cover 500, and a portion of the wing part 320 may be located inside the release cover 500 and the other portion thereof may be located outside the release cover 500. Here, the inside and the outside may refer to a planar direction (e.g., X-axis and/or Y-axis directions in FIG. 5). As shown in FIG. 5, an outer end portion of the wing part 320 and a top end of the wing part 320 are located inside the release cover 500 in the width direction of the battery cell 100, and may be relatively stably guided and attached to the first surface FS of the battery cell 100 by the release cover 500. In addition, a bottom end of the wing part 320 is located outside the release cover 500, so that the former may serve as an indicator for checking the attachment position of the wing part 320.

The opening 330 is an empty region of the first attachment cover 300, and may be a region in which the second attachment cover 400 is located. The opening 330 extends over the inner region 310, the wing part 320, and the second outer region 360, and may be adjacent to any one of the pair of long sides LS. As shown in FIG. 5, the opening 330 may correspond to the long side LS adjacent to the wing part 320. The shape of the opening 330 is not particularly limited, and may be a circle, an ellipse, or a polygon such as a triangle, a rectangle, or the like. As shown in FIG. 5, the opening 330 may have a rectangular shape elongated in the longitudinal direction of the battery cell 100. A pair of long sides of the opening 330 may be located in the inner region 310 and the wing part 320, and each of a pair of short sides thereof may extend over the inner region 310, the wing part 320, and the second outer region 360.

The edge region 340 is a region extending along the edge of the opening 330, and may be extended to include the opening 330 or the second attachment cover 400 inside the opening 330. Like the opening 330, the edge region 340 is an empty region of the first attachment cover 300, and a region of the opening 330 in which the second attachment cover 400 is located may be spaced apart from the regions such as the inner region 310, the wing part 320, and the second outer region 360 to form a boundary. Alternatively, the edge region 340 is a region for supporting the second attachment cover 400, and an adhesive material is applied to the inner side surface of the edge region 340 (e.g., the surface facing the battery cell 100), so that the edge of the second attachment cover 400 may be attached thereto. The release cover 500 may cover the edge region 340.

The first outer region 350 is connected to the inner region 310 and may surround any one of the pair of long sides LS of the battery cell 100. As shown in FIGS. 5 and 9, the first outer region 350 may surround the long side LS located at the opposite side of the opening 330 or the second outer region 360. A portion of the first outer region 350 may surround a side surface of the battery cell 100 corresponding to the long side LS, and the other portion thereof may surround the first surface FS. The first outer region 350 may be attached to the long side LS and the first surface FS of the battery cell 100. When attaching the first attachment cover 300 to the battery cell 100 or separating the second attachment cover 400 or the release cover 500 from the battery cell 100, the first outer region 350 may be configured so that the first attachment cover 300 is not separated from the battery cell 100 or deviated from the battery cell 100.

The second outer region 360 is connected to the inner region 310 and may surround any one of the pair of long sides LS of the battery cell 100. As shown in FIGS. 5 and 9, the second outer region 360 may surround the long side LS located at the opposite side of the first outer region 350. A portion of the second outer region 360 may surround a side surface of the battery cell 100 corresponding to the long side LS, and the other portion thereof may surround the first surface FS. The second outer region 360 may be attached to the long side LS and the first surface FS of the battery cell 100. When attaching the first attachment cover 300 to the battery cell 100 or separating the second attachment cover 400 or the release cover 500 from the battery cell 100, the second outer region 360 may be configured so that the first attachment cover 300 is not separated from the battery cell 100 or deviated from the battery cell 100.

The protrusion 370 may be attached to the short side SS of the battery cell 100 to support the first attachment cover 300 to the battery cell 100. The protrusion 370 may include a plurality of protrusion parts. For example, as shown in FIG. 5, the protrusion 370 may include first protrusion parts 371 located at a top end of the first outer region 350 and a top end of the second outer region 360, respectively, and second protrusion parts 372 located at a bottom end of the first outer region 350 and a bottom end of the second outer region 360, respectively. Each of the first protrusion parts 371 may be attached to the short side SS located above of the pair of short sides SS, and each of the second protrusion parts 372 may be located on the short side SS located below of the pair of short sides SS. While the first outer region 350 and the second outer region 360 are attached to the pair of long sides LS, the first protrusion parts 371 and the second protrusion parts 372 may be folded toward the short sides SS and then attached to the short sides SS.

The second attachment cover 400 is attachable to and detachable from the battery cell 100 and may surround a portion of the battery cell 100. For example, the second attachment cover 400 may be a thin film such as PET or TPU of the same material as or a different material from that of the first attachment cover 300. The second attachment cover 400 may have a size smaller than that of the first surface FS or the second surface BS of the battery cell 100 in at least one direction (e.g., the width direction of the battery cell 100 or the X-axis direction of FIG. 1). The second attachment cover 400 may surround at least a portion of the first surface FS and at least a portion of the second surface BS of the battery cell 100. As shown in FIGS. 1 and 2, the second attachment cover 400 may surround a portion of the second surface BS of the battery cell 100 and may surround a portion of the first surface FS of the battery cell 100.

The second attachment cover 400 may surround one corner of the battery cell 100. The second attachment cover 400 may surround at least a portion of one long side LS in a state of being attached to the battery cell 100. As shown in FIG. 5, the second attachment cover 400 may surround the long side LS corresponding to the second outer region 360 on the opposite side of the first outer region 350.

The second attachment cover 400 may have a size smaller than that of the first attachment cover 300. As shown in FIG. 5, the second attachment cover 400 may be located within the opening 330 of the first attachment cover 300. The second attachment cover 400 does not overlap the first attachment cover 300, and may have a size equal to or smaller than that of the opening 330. The second attachment cover 400 may be located inward in a planar direction from an outline of the first attachment cover 300. The second attachment cover 400 may be attachable to and detachable from the battery cell 100, independently of the first attachment cover 300. That is, in a state in which the first attachment cover 300 and the second attachment cover 400 are attached to the battery cell 100, even when the second attachment cover 400 is separated from the battery cell 100, the first attachment cover 300 may be maintained attached to the battery cell 100. In addition, even when the first attachment cover 300 is separated from the battery cell 100, the second attachment cover 400 may be maintained attached to the battery cell 100. That is, the first attachment cover 300 and the second attachment cover 400 may be physically separated from each other.

The second attachment cover 400 may have an adhesive material applied to a surface facing the battery cell 100. The adhesive material has a weak adhesive strength that allows a user to attach and detach the second attachment cover 400 to and from the battery cell 100 by hand, and allows the second attachment cover 400 to be repeatedly attached to and detached from the battery cell 100.

The first attachment cover 300 and the second attachment cover 400 may be used to separate the battery pack 10 from an application (e.g., a smartphone, a battery charging device, etc.). For example, when the user separates and pulls the second attachment cover 400 attached to the first surface FS while the first attachment cover 300 and the second attachment cover 400 are attached to the battery cell 100, the battery cell 100 may be separated from the application by the second attachment cover 400 attached to the second surface BS.

The first attachment cover 300 and the second attachment cover 400 may be at the same level. As shown in FIG. 5, one of the first attachment cover 300 and the second attachment cover 400 may not be located above or below the other, but may be at the same level.

The release cover 500 overlaps at least a portion of the first attachment cover 300 and the second attachment cover 400, and allows the first attachment cover 300 and the second attachment cover 400 to be relatively stably attached to the battery cell 100. The release cover 500 is attachable to and detachable from the first attachment cover 300 and the second attachment cover 400. A portion of the release cover 500 may be located on the second surface BS of the battery cell 100, and the other portion of the release cover 500 may be located on any one of the pair of long sides LS and the first surface FS of the battery cell 100 to cover a portion of the first attachment cover 300 and the second attachment cover 400. In addition, the release cover 500 may cover the entire opening 330 and the entire second attachment cover 400 so that the opening 330 is located inside. Therefore, when attaching the first attachment cover 300 and the second attachment cover 400 to the battery cell 100, the release cover 500 may relatively stably support the first attachment cover 300 and the second attachment cover 400. In addition, the release cover 500 covers the entire opening 330 and the entire second attachment cover 400 so that the attachment quality does not deteriorate, such as wrinkles, while the second attachment cover 400 located within the opening 330 is attached to the battery cell 100. In addition, another portion of the release cover 500 does not overlap the battery cell 100, or the first attachment cover 300 and the second attachment cover 400, and may protrude to the outside of any one short side SS of the battery cell 100.

The release cover 500 may be at a different level from those of the first attachment cover 300 and the second attachment cover 400. For example, the release cover 500 may be located on a surface of the first attachment cover 300 and the second attachment cover 400 opposite to a surface of the first attachment cover 300 and the second attachment cover 400 which faces the battery cell 100. While the first attachment cover 300 and the second attachment cover 400 are attached to the battery cell 100, the release cover 500 may be positioned on the outer surfaces of the first attachment cover 300 and the second attachment cover 400.

As shown in FIG. 5, while the release cover 500 is located on the first attachment cover 300 and the second attachment cover 400, a portion of the first attachment cover 300 may be located inside the release cover 500, another portion may be located outside the release cover 500, and the second attachment cover 400 may be located inside the release cover 500 as a whole.

The release cover 500 may include a first region 510 and a second region 520. The first region 510 is a portion surrounding the battery cell 100 (for example, the first surface FS or the second surface BS of the battery cell 100), and may overlap the first attachment cover 300 and the second attachment cover 400. The first region 510 may cover at least a portion of the first attachment cover 300 and at least a portion of the second attachment cover 400.

The first region 510 may be attached to the first attachment cover 300 and the second attachment cover 400 because an adhesive material G2 is applied to a surface facing the battery cell 100. The adhesive material G2 may be a material having an adhesive force weaker than that of an adhesive material G1. Therefore, when separating the release cover 500 from the battery cell 100, it may be possible to prevent or reduce instances of the first attachment cover 300 and the second attachment cover 400 being separated from the battery cell 100.

The adhesive material G2 may not be applied to the second region 520. That is, the first region 510 may be an adhesive region in which the adhesive material G2 is applied on a surface facing the battery cell 100 to adhere to the battery cell 100, and the second region 520 may be a non-adhesive region in which the adhesive material G2 is not applied on a surface facing the battery cell 100 and thus is not adhered to the battery cell 100. Therefore, the release cover 500 may be separated from the first attachment cover 300 and the second attachment cover 400 by pulling the second region 520. As shown in FIG. 8, in a state in which the first attachment cover 300, the second attachment cover 400, and the release cover 500 are attached to the battery cell 100, the second region 520 may be a region not overlapping the battery cell 100.

The second region 520 may extend from the first region 510 toward any one of the pair of short sides SS. For example, the second region 520 extends toward a short side SS (e.g., a short side SS located above of the pair of short sides SS) at a position corresponding to the protection circuit module 200 of the pair of short sides SS, and may protrude further outward than the short side SS.

Before attaching to the battery cell 100, the first attachment cover 300, the second attachment cover 400, and the release cover 500 may be attached to a separate release paper. For example, the first attachment cover 300, the second attachment cover 400, and the release cover 500 have one or more release papers attached to the surfaces to which the adhesive materials G1 and G2 are applied, and the first attachment cover 300, the second attachment cover 400, and the release cover 500 may be attached to the battery cell 100 after separating the one or more release papers.

Referring to FIGS. 8 to 10, operations of attaching the first attachment cover 300, the second attachment cover 400, and the release cover 500 to the battery cell 100 are described. For reference, although the protection circuit module 200 is not displayed in the battery cell 100 in FIGS. 8 to 10 for convenience of description, the protection circuit module 200 may be connected to the battery cell 100.

First, the first attachment cover 300, the second attachment cover 400, and the release cover 500 are prepared. In this state, the release cover 500 may be attached to the outer surfaces (e.g., the opposite surface to the surface facing the battery cell 100) of the first attachment cover 300 and the second attachment cover 400. In addition, one or more release papers may be attached to the inner surfaces of the first attachment cover 300 and the second attachment cover 400.

Next, the first attachment cover 300 is attached to the second surface BS of the battery cell 100 (FIG. 8). When the release paper is attached to the first attachment cover 300, the second surface BS of the battery cell 100 is attached to the surface of the first attachment cover 300 to which the adhesive material G1 is applied after removing the release paper. For example, the second surface BS may be attached to the inner region 310. In addition, even a portion of the second attachment cover 400 may be attached to the second surface BS.

Next, the first attachment cover 300 is attached to the first surface FS of the battery cell 100 (FIG. 9). For example, the release cover 500 may be folded toward the first surface FS to attach the first attachment cover 300 and the second attachment cover 400 attached to the release cover 500 to the first surface FS at the same time. Accordingly, as shown in FIG. 9, the second outer region 360 and a portion of the second attachment cover 400 may surround any one long side LS of the battery cell 100, and the wing part 320 and the other portion of the second attachment cover 400 may be attached to the first surface FS. In addition, the first outer region 350 may surround the other long side LS of the battery cell 100. The operation of attaching the first outer region 350 to the long side LS and the operation of attaching the second outer region 360 to the long side LS may be performed simultaneously or any one operation may be performed first.

In addition, the protrusion 370 is attached to the short sides SS of the battery cell 100. For example, the pair of first protrusion parts 371 are attached to the short side SS located above the battery cell 100, and the pair of second protrusion parts 372 are attached to the short side SS below the battery cell 100.

Next, the release cover 500 is removed (FIG. 10). By pulling a portion of the release cover 500, the release cover 500 may be removed from the first attachment cover 300 and the second attachment cover 400. For example, the release cover 500 may be removed by pulling the second region 520 to which the adhesive material G2 is not applied.

In addition, the battery pack 10 may be inserted into an application while the release cover 500 is removed. Thereafter, when the battery pack 10 is relocated or removed, a portion of the second attachment cover 400 may be separated from the battery cell 100 and then pulled to remove the battery pack 10 from the application.

The battery pack 10 may be easily separated and relocated from the application by the first attachment cover 300 and the second attachment cover 400. In addition, the battery pack 10 may prevent or reduce instances of the second attachment cover 400 being misaligned with respect to the first attachment cover 300 or attached with wrinkle to the battery cell 100 when the first attachment cover 300 and the second attachment cover 400 are attached to the battery cell 100 by the release cover 500 supporting the first attachment cover 300 and the second attachment cover 400.

The battery pack may be easily removed and relocated from the application by means of the first attachment cover and the second attachment cover. In addition, the release cover supports the first attachment cover and the second attachment cover, thereby preventing or reducing instances of the second attachment cover being deviated from the first attachment cover or attached with wrinkle to the battery cell when the first and second attachment covers are attached to the battery cell.

However, the characteristics of embodiments according to the present disclosure are not limited to the characteristics described above, and other characteristics not mentioned may be more clearly understood by those skilled in the art from the description of the present disclosure described below.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure as defined by the following claims, and their equivalents.

## Claims

1. A battery pack comprising:
a battery cell;
a first attachment cover surrounding a first portion of the battery cell and is attachable to and detachable from the battery cell;
a second attachment cover surrounding a second portion of the battery cell at a different location from the first attachment cover and is attachable to and detachable from the battery cell; and
a release cover covering at least a portion of the first attachment cover and at least a portion of the second attachment cover and is attachable to and detachable from the first attachment cover and the second attachment cover.

2. The battery pack as claimed in claim 1, wherein
the first attachment cover is at a same level as that of the second attachment cover, and
the release cover is at a different level from those of the first attachment cover and the second attachment cover.

3. The battery pack as claimed in claim 1 or claim 2, wherein the second attachment cover is located inward in a planar direction from an outline of the first attachment cover.

4. The battery pack as claimed in any one of claims 1 to 3, wherein
the first attachment cover includes an opening, and
the second attachment cover is located inside the opening, does not overlap the first attachment cover, and has a size equal to or smaller than that of the opening.

5. The battery pack as claimed in any one of claims 1 to 4, wherein the second attachment cover is attachable to or detachable from the battery cell, independently of the first attachment cover.

6. The battery pack as claimed in any one of claims 1 to 5, wherein the battery cell includes:
a first surface;
a second surface opposite the first surface; and
a pair of long sides connecting the first surface with the second surface; and
a pair of short sides connecting the first surface with the second surface at different positions from those of the pair of long sides, and wherein
the first attachment cover surrounds at least a portion of the pair of long sides, and
the second attachment cover surrounds at least a portion of any one of the pair of long sides.

7. The battery pack as claimed in claim 6, wherein the first attachment cover surrounds an entire portion of the second surface, a portion of the first surface, and at least a portion of each of the pair of long sides.

8. The battery pack as claimed in claim 6 or claim 7, wherein the release cover is on a surface of the first attachment cover and the second attachment cover opposite to a surface of the first attachment cover and the second attachment cover which faces the battery cell.

9. The battery pack as claimed in claim 8, wherein, in a state in which the release cover is positioned on the first attachment cover and the second attachment cover, a portion of the first attachment cover is inside the release cover and another portion of the first attachment cover is outside the release cover, and the second attachment cover is entirely inside the release cover.

10. The battery pack as claimed in claim 8 or claim 9, wherein the release cover includes:
a first region covering at least a portion of the first attachment cover and at least a portion of the second attachment cover; and
a second region extending from the first region toward any one of the pair of short sides and not overlapping the battery cell.

11. The battery pack as claimed in claim 10, further comprising a protection circuit module connected to the battery cell, wherein the second region extends toward a short side at a position corresponding to the protection circuit module of the pair of short sides, and protrudes further outward than the short side.

12. The battery pack as claimed in claim 10 or claim 11, wherein
the first region has an adhesive material applied to a surface facing the battery cell, and
the second region does not have the adhesive material applied to the surface facing the battery cell.

13. The battery pack as claimed in claim 12, wherein adhesive materials applied to surfaces of the first attachment cover and the second attachment cover facing the battery cell have greater adhesive force than the adhesive material applied to the first region.

14. The battery pack as claimed in any one of claims 6 to 13, wherein the first attachment cover includes:
an inner region attached to the second surface;
a first outer region connected to the inner region to correspond to any one of the long sides of the battery cell; and
a second outer region connected to the inner region to correspond to the other of the long sides of the battery cell;
a wing part connected to the second outer region and attached to the first surface;
an opening extending over the wing part, the second outer region and the inner region; and
an edge region extending along an edge of the opening, wherein
the second attachment cover is located inside the opening.

15. The battery pack as claimed in claim 14, wherein the release cover covers the edge region.
